# EUROPÄISCHE PATENTSCHRIFT

(11) **EP 4 124 437 B1**
(45) Veröffentlichungstag und Bekanntmachung des Hinweises auf die Patenterteilung: **06.09.2023**
(21) Anmeldenummer: 21188657.7
(22) Anmeldetag: 30.07.2021
(51) Int. Cl.: B29C 45/27

(54) **HEISSKANALDÜSE**
HOT RUNNER NOZZLE
BUSE DE CANAL CHAUD

(43) Veröffentlichungstag der Anmeldung: 01.02.2023
(73) Patentinhaber: Witosa GmbH, 35066 Frankenberg/Wangershausen (DE)
(72) Erfinder: GLITTENBERG, Torsten, 35066 Frankenberg (DE); HALLENBERGER, Martin, 35088 Frohnhausen (DE)
(74) Vertreter: Walther Bayer Faber Patentanwälte PartGmbB

(56) Entgegenhaltungen:
- EP-A1- 3 147 098
- CN-A- 111 958 928
- US-B2- 9 346 206
- US-B2- 10 766 176
- US-B2- 10 899 055

## Beschreibung

Die Erfindung betrifft eine Heißkanaldüse für Spritzgießformen, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen die Spritzgießform vorgesehen ist, und wobei wenigstens das Düsenrohr, die Düsenspitze und der Anlagekragen mittels eines generativen Fertigungsverfahrens als einteiliger Grundkörper hergestellt sind.

### STAND DER TECHNIK

Aus der DE 10 2006 029 152 A1 ist eine gattungsbildende Heißkanaldüse für Spritzgießformen bekannt. Derartige Heißkanaldüsen dienen dazu, eine vorgeheizte, plastifizierte Kunststoffmasse in eine Spritzgießform einzuspritzen, wobei die Heißkanaldüse mit der Düsenspitze in die Kavität der Spritzgießform mündet. Ist der Spritzguss erfolgt, so schließt sich eine Abkühlphase an, während der die Kunststoffschmelze für den bereits nächsten Spritzgussschritt in der Heißkanaldüse im plastifizierten Zustand vorgehalten werden muss. Hierzu ist die Heißkanaldüse beheizt, wobei moderne, insbesondere hoch additivierte Kunststoffe in einem nur schmalen Temperaturband vorgehalten werden dürfen, ohne dass die Kunststoffschmelze bei zu niedriger Temperatur entweder bereits erstarrt und der Folgeprozess unmöglich wird, oder die Kunststoffmasse überhitzt, sodass sich insbesondere aufadditivierte Bestandteile der Kunststoffmasse zersetzen und die späteren Spezifikationen eines aus der Kunststoffmasse gespritzten Bauteils nicht eingehalten werden können.

Daraus ergibt sich die Forderung, eine Heißkanaldüse über der möglichst gesamten Länge von der Kanaleintrittsseite bis zur Düsenspitze so zu beheizen, dass sich eine gleichmäßige Temperaturverteilung ergibt, auch wenn der Anlagekragen im Bereich der Düsenspitze gegen die Spritzgießform dichtend zur Anlage gebracht ist und durch die kalte Spritzgießform auskühlen kann. Folgerichtig ergibt sich insbesondere die Schwierigkeit, die Düsenspitze derart zu temperieren, dass diese trotz der Wärmeableitung über die Anlage des Anlagekragens zur Spritzgießform die geforderte Temperatur hält, ohne dass sich über der Längserstreckung des Düsenrohrs gewissermaßen ein Temperaturbauch ergibt, und sich der Kunststoff im Durchtrittskanal auf der Länge des Düsenrohres überhitzt und damit zersetzt.

Die US 2016/0151948 A1 offenbart eine Heißkanaldüse für Spritzgießformen mit einem Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen eine Werkzeugform vorgesehen ist, und wobei wenigstens das Düsenrohr, die Düsenspitze und der Anlagekragen mittels eines generativen Fertigungsverfahrens als einteiliger Grundkörper hergestellt sind. Nachteilhafterweise bieten sich konstruktionsbedingt nur eingeschränkte Möglichkeiten, die Heißkanaldüse an einer Verteilerplatte zu befestigen, was unter Vorspannung mit einer Tellerfeder vorgesehen wird.

Aus der EP 3 147 098 A1 ist eine Heißkanaldüse für Spritzgießformen bekannt geworden, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen die Spritzgießform vorgesehen ist. Das Düsenrohr weist eine Werkzeugaufnahme auf, an der ein Werkzeug zum Einschrauben eines am Außenumfang des Düsenrohres aufgebrachten Gewindes in eine Verteilerplatte angesetzt werden kann. Nachteilhafterweise muss zum Einschrauben der Heißkanaldüse der Grundkörper und damit vor allem das Düsenrohr in Rotation versetzt werden, und eventuelle elektrische Verbindungen eines Heizelementes der Heißkanaldüse wickeln sich dabei um das Düsenrohr.

Die US 10,899,055 B2 offenbart eine weitere Ausführungsform einer Heißkanaldüse, die ebenfalls eine Werkzeugaufnahme aufweist, an der ein Werkzeug zum Einschrauben eines am Außenumfang des Düsenrohres aufgebrachten Gewindes in eine Verteilerplatte angesetzt werden muss.

Die EP 2 655 037 B1 bedient sich eines am unteren Ende der Heißkanaldüse angebrachten Düsenträgers, der auf einer Verteilerplatte aufgespannt werden muss. Der Düsenträger ist dabei bauraumintensiv ausgeführt und muss mehrteilig ausgebildet werden. Zudem ist eine spanende Bearbeitung der Anlageoberflächen erforderlich.

Die EP 1 857 253 A1 offenbart eine Heißkanaldüse mit einem am unteren Schaftende aufgebrachten Außengewinde, wobei die Heißkanaldüse um ihre Mittelachse gedreht werden muss, um diese in einer Gewindeaufnahme in einer Verteilerplatte einzuschrauben. Die zum Einschrauben erforderliche Drehung der Heißkanaldüse ist allerdings dann nur erschwert möglich, wenn Heizdrähte und/oder Sensorkabel und dergleichen an der Heißkanaldüse bereits angebracht sind und damit die Drehung verhindert ist.

Insofern sind die meisten Befestigungskonzepte hinsichtlich ihrer Flexibilität stark eingeschränkt undloder zu bauraumintensiv. Wünschenswert ist demnach eine verbesserte Möglichkeit der Befestigung, die einen nur minimalen Bauraum erfordert und bei der auftretende thermische Verspannungen möglichst minimiert werden.

### OFFENBARUNG DER ERFINDUNG

Die Aufgabe der Erfindung besteht in der weiteren Verbesserung einer Heißkanaldüse mit einer einfachen Befestigung auf der Verteilerplatte, wobei bei der zur Herstellung der Heißkanaldüse ein generatives Fertigungsverfahren genutzt werden soll und wobei die mit diesem Fertigungsverfahren einhergehenden gestalterischen Freiheiten weitergehend genutzt werden sollen.

Es soll insofern einerseits eine Gestalt der Heißkanaldüse geschaffen werden, die eine homogene Temperatur für die im Durchtrittskanal durch die Heißkanaldüse geführte Kunststoffschmelze schafft, und zugleich sollen die Mittel zur Befestigung der Heißkanaldüse an der Verteilerplatte optimiert werden, insbesondere hinsichtlich der Einfachheit des Aufbaus und der Minimierung des erforderlichen Bauraums. Ferner sollen auftretende thermische Verspannungen bei der Befestigung der Heißkanaldüse minimiert werden, sodass insbesondere auf die Verwendung von Nachgiebigkeitselementen wie Tellerfedern und dergleichen verzichtet werden kann.

Zur Lösung der der Erfindung zugrunde liegenden Aufgabe wird vorgeschlagen, dass auf dem Grundkörper eine Befestigungsmutter lose und entlang der Mittelachse formschlüssig und verliersicher aufgebracht ist. Die damit geschaffene Befestigungsmöglichkeit zur Anordnung der Heißkanaldüse in oder an einer Verteilerplatte entspricht dem Prinzip einer Überwurfmutter, die in Drehbewegung versetzt werden kann, um in ein Gewinde in oder an der Verteilerplatte eingeschraubt zu werden, ohne dass der Grundkörper der Heißkanaldüse mitgedreht werden muss. Wird die Befestigungsmutter in Drehbewegung versetzt, muss die Heißkanaldüse selbst nicht um die Mittelachse rotieren, und diese kann unter Beibehaltung der Rotationsposition an der Verteilerplatte befestigt werden, sodass auch noch während der Befestigung der Heißkanaldüse an der Verteilerplatte Heizdrähte und Signalkabel aus dem Grundkörper austreten können, ohne dass die Heißkanaldüse rotieren muss, um diese zu befestigen. Andererseits erfolgt die Befestigung der Heißkanaldüse nicht mittels eines Klemmprinzips, beispielsweise unter Verwendung eines mittels Schraubelementen fest schraubbaren Düsenträgers und/oder unter Verwendung von Tellerfedern.

Besonders vorteilhaft ist es, wenn die Befestigungsmutter auf dem Grundkörper lose und entlang der Mittelachse formschlüssig aufgebracht ist. Der Formschluss zwischen dem Grundkörper und der Befestigungsmutter besagt dabei im vorliegenden Sinne, dass die Befestigungsmutter zwar lose am Grundkörper angeordnet ist, die Befestigungsmutter kann jedoch nicht entlang der Mittelachse vom Grundkörper herunterbewegt werden. Der Formschluss wird dabei insbesondere auch dann erzeugt, wenn keine zusätzlichen Sicherungselemente, wie beispielsweise Sicherungsringe, Sprengringe und dergleichen, am Grundkörper angeordnet sind.

Eine solche Anordnung ist im Wesentlichen nur dann herstellbar, wenn auch die Befestigungsmutter simultan mit der Herstellung des Grundkörpers mittels des generativen Fertigungsverfahrens erzeugt wird.

Zur simultanen Herstellung des Grundkörpers und der Befestigungsmutter ist es von besonderem Vorteil, wenn die Befestigungsmutter mittels wenigstens einem durchtrennbaren Haltemittel mit dem Grundkörper verbunden ist. Dadurch wird während des generativen Herstellverfahrens und dem damit einhergehenden schichtweisen Aufbau des Grundkörpers die Befestigungsmutter über die Haltemittel an einer definierten Position erzeugt, sodass bereits in Anordnung an den Haltemitteln die Befestigungsmutter den Grundkörper unter Einhaltung eines umlaufenden Spaltes erzeugt, wobei der umlaufende Spalt zwischen der Außenumfangsfläche des Grundkörpers und der Befestigungsmutter lediglich über das wenigstens eine oder die mehreren Haltemittel überbrückt wird. Für den späteren Einsatz der Heißkanaldüse werden die Haltemittel durchtrennt, und die Befestigungsmutter kann relativ zum Grundkörper bewegt werden. So kann die Befestigungsmutter beispielsweise bei einer Bewegung entlang der Mittelachse am Grundkörper an eine Anlage anschlagen, sodass die Befestigungsmutter beispielsweise in einer Verteilerplatte eingeschraubt werden kann, während die Heißkanaldüse schließlich über das Einschrauben der Befestigungsmutter an der Verteilerplatte fest angeordnet wird. Insofern ist die Befestigungsmutter zwar formschlüssig am Grundkörper angeordnet, diese kann jedoch leicht radial und insbesondere axial in beziehungsweise entlang der Mittelachse bewegt werden.

Das Durchtrennen kann beispielsweise mittels eines spanenden Prozesses erfolgen, etwa mittels eines Drehvorganges auf einer Drehmaschine oder mittels eines Trennschleifprozesses. So können die Haltemittel vollständig entfernt werden, wobei es grundsätzlich möglich ist, die Haltemittel mit einem Werkzeug zu trennen, das eine geometrisch bestimmte oder eine geometrisch unbestimmte Schneide hat. Damit können mittels eines Schleifverfahrens in einem Bearbeitungsvorgang bzw. einer Aufspannung auch weitere Funktionsflächen oder freie Oberflächen der Heißkanaldüse bearbeitet werden, insbesondere mittels eines Drehvorganges oder mittels eines Schleifvorganges.

Der Grundkörper weist einen Sockelabschnitt auf, der der oberseitigen Anordnung der Düsenspitze am Grundkörper abgewandt ausgebildet ist. Der Sockelabschnitt schließt den Grundkörper nach unten in Richtung zur Kanaleintrittsseite hin ab, wobei die Befestigungsmutter so am Grundkörper angeordnet ist, dass die Befestigungsmutter den Sockelabschnitt umschließt.

Der Sockelabschnitt endet insofern mit der Kanaleintrittsseite, wobei der Sockelabschnitt am unteren Ende der Kanaleintrittsseite eine Aufweitung aufweist, gegen die die Befestigungsmutter bei einer Verlagerung entlang der Mittelachse zur Anlage gelangen kann, um die Heißkanaldüse schließlich auf einer Verteilerplatte zu befestigen. Da die Befestigungsmutter lose auf dem Sockelabschnitt des Grundkörpers angeordnet ist, kann die Befestigungsmutter eine Drehbewegung um die Mittelachse ausführen, während der Grundkörper der Heißkanaldüse nicht mitgedreht wird. Eine vorteilhafte Befestigungsweise kann also erfindungsgemäß erreicht werden, indem die Befestigungsmutter in ein Gewinde der Verteilerplatte eingeschraubt wird, die zum Einschrauben eine Drehbewegung um den Grundkörper der Heißkanaldüse ausführt. Schließlich gelangt beim Einschrauben der Befestigungsmutter in die Verteilerplatte eine Gegenanlagefläche zur Anlage gegen die Aufweitung am Sockelabschnitt, sodass schließlich der Grundkörper der Heißkanaldüse mittels der Befestigungsmutter formschlüssig an der Verteilerplatte befestigt ist.

Die Aufweitung an dem Sockelabschnitt des Grundkörpers bildet insbesondere eine Kegelfläche, wobei der Kegel sich in Richtung zur unterseitigen Kanaleintrittsseite aufweitet. An der Befestigungsmutter ist korrespondierend hierzu eine Gegenkegelfläche ausgebildet, die die gleiche Steigung mit der gleichen Steigungsrichtung aufweist wie die Kegelfläche am Sockelabschnitt.

Das wenigstens eine durchtrennbare Haltemittel ist an einer ersten Endseite der Befestigungsmutter angeordnet, beispielsweise an der oberen Seite, die in Richtung zur Düsenspitze weist. Die Gegenfläche ist an der gegenüberliegenden zweiten Endseite der Befestigungsmutter angeordnet, die in Richtung zur Kanaleintrittsseite des Grundkörpers weist. Die erste Endseite und die zweite Endseite der Befestigungsmutter stehen sich dabei entlang der Mittelachse gegenüber, wobei die Mittelachse sowohl die Mittelachse des Grundkörpers als auch die Mittelachse der Befestigungsmutter bildet.

Um die Befestigungsmutter in die Verteilerplatte einschrauben zu können, weist die Befestigungsmutter einen Werkzeugansatzabschnitt auf, über den mit einem Werkzeug die Befestigungsmutter um die Mittelachse verdrehbar ist. Der Werkzeugansatzabschnitt kann eine Schlüsselweite für einen Maulschlüssel bilden, wobei es auch denkbar ist, dass der Werkzeugansatzabschnitt beispielsweise Vertiefungen oder einen Nutenkranz aufweist, um einen Hakenschlüssel anzusetzen.

Mit weiterem Vorteil weist die Befestigungsmutter einen Außengewindeabschnitt auf, über den die Befestigungsmutter in eine Gewindeaufnahme der Verteilerplatte einschraubbar ist, indem diese um die Mittelachse verdreht wird. Selbstverständlich besteht auch die Möglichkeit, dass die Befestigungsmutter einen Hülsenabschnitt mit einem Innengewinde aufweist, sodass die Befestigungsmutter alternativ auch auf ein Außengewinde an der Verteilerplatte aufgeschraubt werden kann.

Die Befestigungsmutter kann in Richtung der Mittelachse betrachtet und beginnend von der ersten Endseite die Haltemittel aufweisen, auf die der Werkzeugansatzabschnitt folgt, und auf den der Außengewindeabschnitt folgt, wobei die zweite Endseite mit der Gegenkegelfläche abschließt. Ist die Heißkanaldüse mit der Befestigungsmutter in Anordnung auf dem Grundkörper fertiggestellt, entfallen die Haltemittel, sodass die Heißkanaldüse im einsatzbereiten Zustand eine Befestigungsmutter aufweist, die lediglich noch den Werkzeugansatzabschnitt, das Außengewinde und die Gegenkegelfläche umfasst.

Die Aufgabe der Erfindung wird weiterhin gelöst durch ein Verfahren zur Herstellung einer Heißkanaldüse, aufweisend einen in einem generativen Fertigungsverfahren hergestellten Grundkörper, der wenigstens ein Düsenrohr, eine Düsenspitze und einen Anlagekragen aufweist, wobei das Verfahren zumindest die folgenden Schritte aufweist: Herstellen einer Befestigungsmutter im generativen Fertigungsverfahren, wobei die Herstellung der Befestigungsmutter mit der Herstellung des Grundkörpers der Heißkanaldüse simultan erfolgt; simultanes Erzeugen von Haltemitteln zwischen der Befestigungsmutter und dem Grundkörper mittels dem generativen Fertigungsverfahren, wobei die simultane Erzeugung der Haltemittel gemeinsam mit der Herstellung des Grundkörpers der Heißkanaldüse und der Befestigungsmutter im entsprechenden Abschnitt erfolgt und schließlich ist das Durchtrennen der Haltemittel zur Vereinzelung der Befestigungsmutter vom Grundkörper vorgesehen.

Das Durchtrennen der Haltemittel erfolgt vorzugsweise mittels eines spanabhebenden Fertigungsverfahrens, insbesondere eines Drehvorgangs oder eines Schleifvorgangs. Der Grundkörper und/oder die Befestigungsmutter werden nach der Herstellung mittels des generativen Fertigungsverfahrens wenigstens teilweise spanend bearbeitet, insbesondere mittels eines Schleifverfahrens. Im Besonderen kann die Düsenspitze nach der Herstellung im generativen Fertigungsverfahren geschliffen werden, wobei auch weitere Funktionsflächen und Freiflächen an der Heißkanaldüse geschliffen werden können. Schließlich kann vorgesehen sein, dass der Grundkörper und/oder die Befestigungsmutter nach der Herstellung mittels des generativen Fertigungsverfahrens und/oder vor oder nach der spanenden Bearbeitung wenigstens teilweise oberflächenbeschichtet werden.

Das generative Fertigungsverfahren beschreibt im vorliegenden Sinne ein Fertigungsverfahren, das auch als 3D-Druck bezeichnet werden kann. Derartige Verfahren sind beispielsweise mit einem SLM-Verfahren möglich, wobei der metallische Werkstoff zur Herstellung des Grundkörpers und auch der Befestigungsmutter im Wesentlichen frei gewählt werden kann.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Seitenansicht der Heißkanaldüse,
- Figur 2: eine Querschnittsansicht der Heißkanaldüse und
- Figur 3: eine Detailansicht der Heißkanaldüse im unteren Bereich mit der im generativen Verfahren hergestellten und damit zugleich verliersicher aufgebrachten Befestigungsmutter.

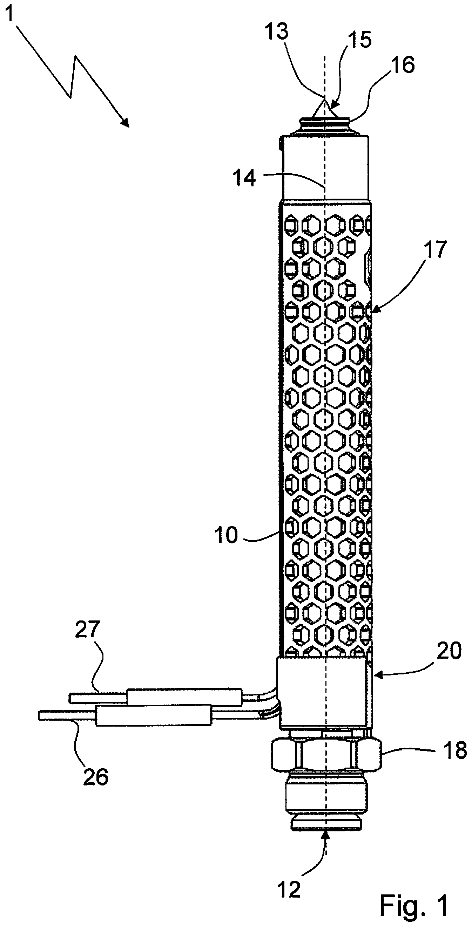

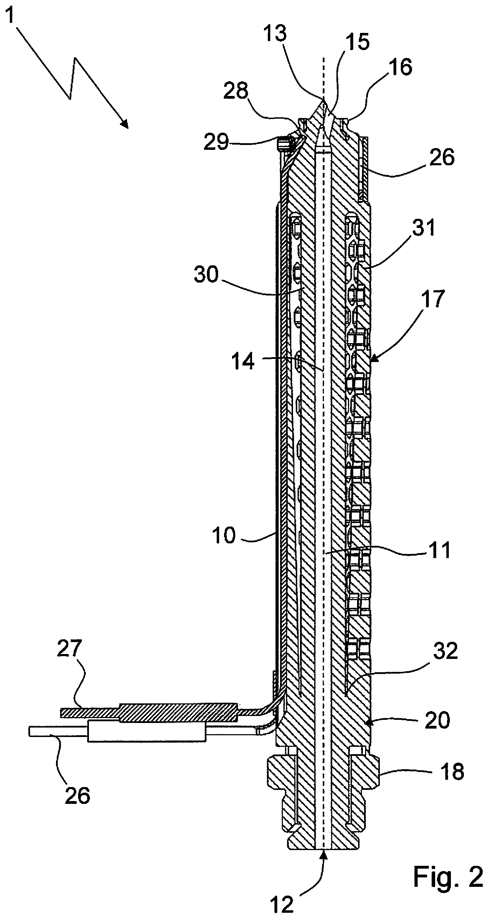

Die Figuren 1 und 2 zeigen jeweils eine Heißkanaldüse 1, und in Figur 1 ist diese in einer Seitenansicht gezeigt, wobei Figur 2 die Heißkanaldüse 1 in einer aufgeschnittenen Querschnittsansicht darstellt.

Die Heißkanaldüse 1 dient zum Einbau in Spritzgießformen, und diese weist ein Düsenrohr 10 mit einem darin ausgebildeten Durchtrittskanal 11 zum Durchtritt einer Kunststoffschmelze auf. Der Durchtrittskanal 11 erstreckt sich von einer rückseitigen Kanaleintrittsseite 12 bis zu einer vorderseitigen Düsenspitze 13 entlang einer Mittelachse 14, und der Düsenkanal 11 mündet in wenigstens einem Austrittskanal 15, der unter einem Winkel zur Mittelachse 14 in der Düsenspitze 13 eingebracht ist. Wird die Heißkanaldüse 1 mit der unteren Kanaleintrittsseite 12 auf einer Verteilerplatte aufgebracht, kann über die Kanaleintrittsseite 12 die Kunststoffschmelze in den Durchtrittskanal 11 eintreten und vorderseitig aus dem Austrittskanal 15 aus der Heißkanaldüse 1 austreten und in die Spritzgießform eingespritzt werden. Ferner weist die Heißkanaldüse 1 einen Anlagekragen 16 auf, der die Düsenspitze 13 vollumfänglich umschließt. Mit dem Anlagenkragen 16 gelangt die Heißkanaldüse 1 in Anlage zur Spitzgießform, während die Heißkanaldüse 1 im Bereich der unteren Kanaleintrittsseite auf der Verteilerplatte aufgebracht wird.

Die dargestellte Heißkanaldüse 1 gemäß der Erfindung weist einen monolithischen, das heißt einteilig und ohne Füge- und Montageschnittstellen ausgebildeten Grundkörper 17 auf, der sich einteilig von der Kanaleintrittsseite 12 bis zum oberen Ende der Düsenspitze 13 erstreckt. Der Grundkörper 17 umfasst insofern wenigstens das Düsenrohr 10 mit dem Durchtrittskanal 11, die Düsenspitze 13 und den Anlagekragen 16. Zur Herstellung des einteiligen Grundkörpers 17 kommt ein generatives Fertigungsverfahren zum Einsatz, beispielsweise ein SLM-Verfahren.

Gemäß der Erfindung ist auf dem Grundkörper 17 eine Befestigungsmutter 18 verliersicher aufgebracht. Die Befestigungsmutter 18 umschließt dabei einen Sockelabschnitt 20 des Düsenrohres 10, und bei einer Bewegung der Befestigungsmutter 18 entlang der Mittelachse 14 gelangt diese jeweils zur Anlage gegen die entsprechend ausgebildete Kontur des Grundkörpers 17 der Heißkanaldüse 1. Die Befestigungsmutter 18 kann insofern in keiner Weise vom Grundkörper 17 entnommen werden. Möglich wird dies erfindungsgemäß durch eine gemeinsame Herstellung der Befestigungsmutter 18 mit dem Grundkörper 17 im generativen Fertigungsverfahren. Die verliersichere Anordnung der Befestigungsmutter 18 kann folglich ohne weitere Sicherungsmittel am Grundkörper 17 formschlüssig angebracht werden, sodass keine Sprengringe, Sicherungsringe und dergleichen zur Anwendung kommen müssen, und die Befestigungsmutter 18 kann zur Befestigung der Heißkanaldüse 1 an einer Verteilerplatte formschlüssig gegen die Außenkontur des Grundkörpers 17 zur Anlage gelangen.

Dargestellt ist die Heißkanaldüse 1 mit einem Heizdraht 26 und mit einem Signalkabel 27, wobei der Heizdraht 26 mäanderförmig um den Bereich unterhalb der Düsenspitze 13 auf der Umfangsfläche aufgebracht ist, und der Heizdraht 26 ist im weiteren Verlauf seitlich am Düsenrohr 10 heruntergeführt und ragt senkrecht von diesem ab. Das Signalkabel 27 mündet in einem Temperaturmesssensor 28, das mit einem Schraubelement 29 in der Düsenspitze 13 gesichert ist.

Wird die Heißkanaldüse 1 auf der Verteilerplatte gesichert, so kann die Befestigungsmutter 18 um die Mittelachse 14 in Drehbewegung versetzt werden, ohne dass der Grundkörper 17 der Heißkanaldüse 1 mit rotieren muss. Dadurch ergibt sich der Vorteil, dass der Heizdraht 26 und das Signalkabel 27 bereits in oder auf der Verteilerplatte verlegt werden kann, und es kann ein entsprechender elektrischer Anschluss bereits hergestellt sein. Anschließend kann die Heißkanaldüse 1 an der Verteilerplatte mittels der Befestigungsmutter 18 befestigt werden, und bedarfsweise auch wieder gelöst werden, ohne dass die elektrische Verbindung des Heizdrahts 26 und des Signalkabels 27 ebenfalls gelöst werden müssen.

Der Sockelabschnitt 20 erstreckt sich von der unteren Kanaleintrittsseite 12 bis hin zu einem Abschnitt, in dem das Düsenrohr 10 sich in einen inneren Rohrkörper 30 zur Bildung des Durchtrittskanals 11 und in einen äußeren Rohrkörper 31 unterteilt, wobei die Unterteilung in einem Übergangsbereich 32 beginnt. Wird die Heißkanaldüse 1 auf der Verteilerplatte montiert, so kann die Befestigungsmutter 18 in Drehbewegung versetzt werden, sodass die Befestigung der Heißkanaldüse 1 über den Sockelabschnitt 20 erfolgt.

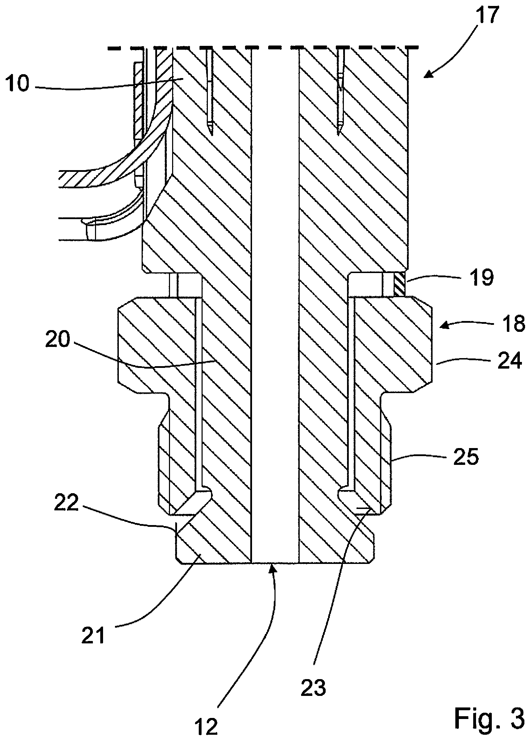

Figur 3 zeigt in einer vergrößerten Ansicht den unteren Sockelabschnitt 20 des Grundkörpers 17 mit der auf diesem aufgebrachten Befestigungsmutter 18. Die Befestigungsmutter 18 ist über durchtrennbare Haltemittel 19 mit dem Grundkörper 17 verbunden, und die durchtrennbaren Haltemittel 19 werden vor dem Einsatz der Heißkanaldüse 1 in oder an der Spritzgießform durch eine spanende Bearbeitung durchtrennt, beispielsweise durch einen Drehprozess oder durch einen Schleifprozess. Erst dann ist die Befestigungsmutter 18 relativ zum Grundkörper 17 frei drehbar und damit einsetzbar, und diese kann mit einem Außengewindeabschnitt 25 in einer Verteilerplatte eingeschraubt werden. Hierzu ist ein Werkzeugansatzabschnitt 24 in Form einer Schlüsselweite, insbesondere in Form eines Sechskants vorgesehen, wobei sich der Werkzeugansatzabschnitt 24 oberhalb des Außengewindeabschnittes 25 befindet. Oberhalb des Werkzeugansatzabschnittes 24 befindet sich das durchtrennbare Haltemittel 19. Die obere Seite oder die Oberseite beschreibt dabei die der Kanaleintrittsseite 12 abgewandten Seite, sodass die Kanaleintrittsseite 12 insofern die untere Seite oder die Unterseite des Grundkörpers 17 beziehungsweise des Sockelabschnitts 20 bildet.

Das untere Ende des Sockelabschnittes 20, in dem die Kanaleintrittsseite 12 ausgebildet ist, besitzt eine Aufweitung 21, die insbesondere zur verliersicheren Aufnahme der Befestigungsmutter 18 auf dem Grundkörper 17 sorgt. De Aufweitung 23 weist eine Kegelfläche 22 auf, und die Befestigungsmutter 18 weist am unteren Ende eine der Kegelfläche 22 der Aufweitung 21 gegenüberliegende Gegenkegelfläche 23 auf. Wird die Befestigungsmutter 18 in die Verteilerplatte eingeschraubt, so gelangt die Gegenkegelfläche 23 der Befestigungsmutter 18 an der Kegelfläche 22 der Aufweitung 21 am Grundkörper 17 zur Anlage, und die Heißkanaldüse 1 kann durch ein Festziehen der Befestigungsmutter 18 an der Verteilerplatte verspannt werden.

Die Erfindung ist im beigefügten Anspruchssatz beschrieben und beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste:

- 1: Heißkanaldüse
- 10: Düsenrohr
- 11: Durchtrittskanal
- 12: Kanaleintrittsseite
- 13: Düsenspitze
- 14: Mittelachse
- 15: Austrittskanal
- 16: Anlagekragen
- 17: Grundkörper
- 18: Befestigungsmutter
- 19: Haltemittel
- 20: Sockelabschnitt
- 21: Aufweitung
- 22: Kegelfläche
- 23: Gegenkegelfläche
- 24: Werkzeugansatzabschnitt
- 25: Außengewindeabschnitt
- 26: Heizdraht
- 27: Signalkabel
- 28: Temperaturmesssensor
- 29: Schraubelement
- 30: innerer Rohrkörper
- 31: äußerer Rohrkörper
- 32: Übergangsbereich

## Patentansprüche

1. Heißkanaldüse (1) für Spritzgießformen, aufweisend ein Düsenrohr (10), in dem ein Durchtrittskanal (11) zum Durchtritt einer Kunststoffschmelze ausgebildet ist, wobei sich der Durchtrittskanal (11) von einer rückseitigen Kanaleintrittsseite (12) bis zu einer vorderseitigen Düsenspitze (13) entlang einer Mittelachse (14) erstreckt und in wenigstens einem Austrittskanal (15) in der Düsenspitze (13) mündet, durch den die Kunststoffschmelze austreibbar ist, wobei ein Anlagekragen (16) zur dichtenden Anlage gegen die Spritzgießform vorgesehen ist, und wobei wenigstens das Düsenrohr (10), die Düsenspitze (13) und der Anlagekragen (16) mittels eines generativen Fertigungsverfahrens als einteiliger Grundkörper (17) hergestellt sind,
**dadurch gekennzeichnet,**
**dass** auf dem Grundkörper (17) eine Befestigungsmutter (18) lose und entlang der Mittelachse (14) formschlüssig und verliersicher aufgebracht ist.

2. Heißkanaldüse (1) nach Anspruch 1,
**dadurch gekennzeichnet,**
**dass** die Befestigungsmutter (18) auf dem Grundkörper (17) entlang der Mittelachse (14) frei von zusätzlichen Sicherungselementen formschlüssig aufgebracht ist.

3. Heißkanaldüse (1) nach Anspruch 1 oder 2,
**dadurch gekennzeichnet,**
**dass** die Befestigungsmutter (18) einteilig mit dem Grundkörper (17) im generativen Fertigungsverfahren hergestellt ist.

4. Heißkanaldüse (1) nach Anspruch 1 bis 3,
**dadurch gekennzeichnet,**
**dass** die Befestigungsmutter (18) mittels wenigstens einem durchtrennbaren Haltemittel (19) mit dem Grundkörper (17) verbunden ist.

5. Heißkanaldüse (1) nach Anspruch 4,
**dadurch gekennzeichnet,**
**dass** der Grundkörper (17) einen Sockelabschnitt (20) aufweist, der den Grundkörper (17) nach unten in Richtung zur Kanaleintrittsseite (12) hin abschließt, wobei die Befestigungsmutter (18) den Sockelabschnitt (20) umschließt.

6. Heißkanaldüse (1) nach Anspruch 5,
**dadurch gekennzeichnet,**
**dass** der Sockelabschnitt (20) mit der Kanaleintrittsseite (12) endet, wobei der Sockelabschnitt (20) am unteren Ende der Kanaleintrittsseite (12) eine Aufweitung (23) aufweist, gegen die die Befestigungsmutter (18) bei einer Verlagerung entlang der Mittelachse (14) zur Anlage bringbar ist, um die Heißkanaldüse (1) auf einer Verteilerplatte zu befestigen.

7. Heißkanaldüse (1) nach Anspruch 6,
**dadurch gekennzeichnet,**
**dass** die Aufweitung (21) eine Kegelfläche (22) aufweist, wobei die Befestigungsmutter (18) eine Gegenkegelfläche (23) aufweist.

8. Heißkanaldüse (1) nach Anspruch 7,
**dadurch gekennzeichnet,**
**dass** die durchtrennbaren Haltemittel (19) an einer ersten Endseite der Befestigungsmutter (18) angeordnet sind, und wobei die Gegenkegelfläche (23) an einer zweiten Endseite der Befestigungsmutter (18) angeordnet sind, wobei sich die erste und die zweite Endseite entlang der Mittelachse (14) gegenüberliegen.

9. Heißkanaldüse (1) nach einem der vorgenannten Ansprüche,
**dadurch gekennzeichnet,**
**dass** die Befestigungsmutter (18) einen Werkzeugansatzabschnitt (24) aufweist, über den mit einem Werkzeug die Befestigungsmutter (18) um die Mittelachse (14) verdrehbar ist.

10. Heißkanaldüse (1) nach Anspruch 9,
**dadurch gekennzeichnet,**
**dass** die Befestigungsmutter (18) einen Außengewindeabschnitt (25) aufweist, über den die Befestigungsmutter (18) in eine Gewindeaufnahme einer Verteilerplatte einschraubbar ist, indem diese um die Mittelachse (14) verdreht wird.

11. Heißkanaldüse (1) nach Anspruch 10,
**dadurch gekennzeichnet,**
**dass** die Befestigungsmutter (18) in der Mittelachse (14) betrachtet beginnend von der ersten Endseite die Haltemittel (19) aufweist, auf die der Werkzeugansatzabschnitt (24) folgt, auf den der Außengewindeabschnitt (25) folgt und wobei die zweite Endseite mit der Gegenkegelfläche (23) abschließt.

12. Verfahren zur Herstellung einer Heißkanaldüse (1), aufweisend einen in einem generativen Fertigungsverfahren hergestellten Grundkörper (17), der wenigstens ein Düsenrohr (10), eine Düsenspitze (13) und einen Anlagekragen (16) aufweist, wobei das Verfahren zumindest die folgenden Schritte aufweist:
- Herstellen einer Befestigungsmutter (18) im generativen Fertigungsverfahren, wobei die Herstellung der Befestigungsmutter (18) mit der Herstellung des Grundkörpers (17) simultan erfolgt,
- simultanes Erzeugen von Haltemitteln (19) zwischen der Befestigungsmutter (18) und dem Grundkörper (17) mittels dem generativen Fertigungsverfahren und
- anschließendes Durchtrennen der Haltemittel (19) zur Vereinzelung der Befestigungsmutter (18) vom Grundkörper (17).

13. Verfahren nach Anspruch 12,
**dadurch gekennzeichnet,**
**dass** das Durchtrennen der Haltemittel (19) mittels eines spanabhebenden Fertigungsverfahrens ausgeführt wird.

14. Verfahren nach einem der Ansprüche 12 oder 13,
**dadurch gekennzeichnet,**
**dass** der Grundkörper (17) und/oder die Befestigungsmutter (18) nach der Herstellung mittels des generativen Fertigungsverfahrens wenigstens teilweise spanend bearbeitet werden.

15. Verfahren nach Anspruch 14,
**dadurch gekennzeichnet,**
**dass** der Grundkörper (17) undloder die Befestigungsmutter (18) nach der Herstellung mittels des generativen Fertigungsverfahrens und/oder vor oder nach der spanenden Bearbeitung wenigstens teilweise oberflächenbeschichtet werden.

## Claims

1. A hot runner nozzle (1) for injection molds comprising a nozzle pipe (10) in which a passage channel (11) for the passage of a plastic melt is formed, wherein the passage channel (11) extends along a center axis (14) from a rear side channel inlet side (12) up to a front side nozzle tip (13) and opens in at least one outlet channel (15) in the nozzle tip (13) through which the plastic melt can be driven, wherein a contact collar (16) for a sealing contact with the injection mold is provided, and wherein at least the nozzle pipe (10) , the nozzle tip (13), and the contact collar (16) are manufactured by means of a generative production process as a single part base member (17),
**characterized in that**
a fastening nut (18) is loosely applied to the base member (17) and is applied along the center axis (14) with a form fit and captively.

2. A hot runner nozzle (1) in accordance with claim 1,
**characterized in that**
the fastening nut (18) is attached with a form fit to the base member (17) along the center axis (14) free of additional securing elements.

3. A hot runner nozzle (1) in accordance with claim 1 or claim 2,
**characterized in that**
the fastening nut (18) is manufactured in one part with the base member (17) in the generative production process.

4. A hot runner nozzle (1) in accordance with claims 1 to 3,
**characterized in that**
the fastening nut (18) is connected to the base member (17) by means of at least one severable holding means (19).

5. A hot runner nozzle (1) in accordance with claim 4,
**characterized in that**
the base member (17) has a pedestal section (20) that terminates the base member (17) toward the bottom in the direction toward the channel inlet side (12), with the fastening nut (18) surrounding the pedestal section (20).

6. A hot runner nozzle (1) in accordance with claim 5,
**characterized in that**
the pedestal section (20) ends with the channel inlet side (12), with the pedestal section (20) having a widened portion (23) at the lower end of the channel inlet side (12) against which the fastening nut (18) can come into contact on a displacement along the center axis (14) to fasten the hot runner nozzle (1) to a distributor plate.

7. A hot runner nozzle (1) in accordance with claim 6,
**characterized in that**
the widened portion (21) has a tapered surface (22), with the fastening nut (18) having a counter-tapered surface (23).

8. A hot runner nozzle (1) in accordance with claim 7,
**characterized in that**
the severable holding means (19) are arranged at a first end side of the fastening nut (18), and with the counter-tapered surface (23) being arranged at a second end side of the fastening nut (18), with the first and second end side being opposite one another along the center axis (14).

9. A hot runner nozzle (1) in accordance with one of the preceding claims,
**characterized in that**
the fastening nut (18) has a tool placement section (24) via which the fastening nut (18) is rotatable about the center axis (14) by a tool.

10. A hot runner nozzle (1) in accordance with claim 9,
**characterized in that**
the fastening nut (18) has an external thread section (25) via which the fastening nut (18) can be screwed into a threaded mount of a distributor plate **in that** it is rotated about the center axis (14).

11. A hot runner nozzle (1) in accordance with one of the preceding claims,
**characterized in that**
viewed in the center axis (14) and starting from the first end side, the fastening nut (18) has holding means (19) which the tool placement section (23) follows and which the external thread section (25) follows, with the second end side terminating with the counter-taper surface (23).

12. A method of manufacturing a hot runner nozzle (1) comprising a base member (17) that is manufactured in a generative production process and that has at least a nozzle pipe (10), a nozzle tip (13), and a contact collar (16), said method comprising at least the following steps:
- manufacturing a fastening nut (16) in the generative production process, with the manufacture of the fastening nut (18) taking place simultaneously with the manufacture of the base member (17);
- simultaneously generating holding means (19) between the fastening nut (18) and he base member (17) by means of the generative production process; and
- subsequently severing the holding means (19) to isolate the fastening nut (18) from the base member (17).

13. A method in accordance with claim 12,
**characterized in that**
the severing of the holding means (19) is performed by means of a cutting production process.

14. A method in accordance with claim 12 or claim 13,
**characterized in that**
the base member (17) and/or the fastening nut (18) is/are at least partially machined in a cutting process after the manufacture by means of the generative production process.

15. A method in accordance with claim 14.
**characterized in that**
the base member (17) and/or the fastening nut (18) is/are at least partially surface coated after the manufacture by means of the generative production process and/or before or after the cutting machining.

## Revendications

1. Buse de canal chaud (1) pour moules de moulage par injection, présentant un tube de buse (10), dans lequel un canal de passage (11) est réalisé pour le passage d'une matière plastique fondue, le canal de passage (11) s'étendant depuis un côté entrée de canal (12) arrière jusqu'à une pointe de buse (13) avant le long d'un axe central (14) et débouchant dans au moins un canal de sortie (15) dans la pointe de buse (13), à travers lequel la matière plastique fondue peut être expulsée, un collet d'appui (16) étant prévu pour l'appui étanchéifiant contre le moule de moulage par injection et au moins le tube de buse (10), la pointe de buse (13) et le collet d'appui (16) étant fabriqués comme corps de base (17) en une seule pièce au moyen d'un procédé de fabrication additive,
**caractérisée en ce que**
un écrou de fixation (18) est placé mobile et de manière imperdable et avec complémentarité de forme le long de l'axe central (14) sur le corps de base (17).

2. Buse de canal chaud (1) selon la revendication 1,
**caractérisée en ce que**
l'écrou de fixation (18) est placé avec complémentarité de forme sur le corps de base (17) le long de l'axe central (14) sans élément de sécurité supplémentaire.

3. Buse de canal chaud (1) selon la revendication 1 ou 2,
**caractérisée en ce que**
l'écrou de fixation (18) est fabriqué en une seule pièce avec le corps de base (17) selon le procédé de fabrication additive.

4. Buse de canal chaud (1) selon les revendications 1 à 3,
**caractérisée en ce que**
l'écrou de fixation (18) est relié au corps de base (17) au moyen d'au moins un moyen de retenue (19) sectionnable.

5. Buse de canal chaud (1) selon la revendication 4,
**caractérisée en ce que**
le corps de base (17) présente une partie socle (20), qui termine le corps de base (17) vers le bas dans la direction du côté entrée de canal (12), l'écrou de fixation (18) entourant la partie socle (20).

6. Buse de canal chaud (1) selon la revendication 5,
**caractérisée en ce que**
la partie socle (20) se termine par le côté entrée de canal (12), la partie socle (20) présentant, à l'extrémité inférieure du côté entrée de canal (12), un évasement (23), contre lequel l'écrou de fixation (18) peut être amené en appui lors d'un déplacement le long de l'axe central (14) pour fixer la buse de canal chaud (1) sur une plaque de répartition.

7. Buse de canal chaud (1) selon la revendication 6,
**caractérisée en ce que**
l'évasement (21) présente une surface conique (22), l'écrou de fixation (18) présentant une surface conique antagoniste (23).

8. Buse de canal chaud (1) selon la revendication 7,
**caractérisée en ce que**
les moyens de retenue (19) sectionnables sont disposés sur un premier côté d'extrémité de l'écrou de fixation (18) et dans laquelle la surface conique antagoniste (23) est disposée sur un second côté d'extrémité de l'écrou de fixation (18), le premier et le second côté d'extrémité étant opposés le long de l'axe central (14).

9. Buse de canal chaud (1) selon l'une des revendications précédentes,
**caractérisée en ce que**
l'écrou de fixation (18) présente une partie d'application d'outil (24), par le biais de laquelle l'écrou de fixation (18) peut être tourné autour de l'axe central (14) avec un outil.

10. Buse de canal chaud (1) selon la revendication 9,
**caractérisée en ce que**
l'écrou de fixation (18) présente une partie à filetage extérieur (25), par le biais de laquelle l'écrou de fixation (18) peut être vissé dans un logement fileté d'une plaque de répartition en le tournant autour de l'axe central (14).

11. Buse de canal chaud (1) selon la revendication 10,
**caractérisée en ce que**
l'écrou de fixation (18) présente, observé dans l'axe central (14), à partir du premier côté d'extrémité, les moyens de retenue (19), auxquels succède la partie d'application d'outil (24), à laquelle succède la partie à filetage extérieur (25) et dans laquelle le second côté d'extrémité se termine par la surface conique antagoniste (23).

12. Procédé de fabrication d'une buse de canal chaud (1), présentant un corps de base (17) fabriqué selon un procédé de fabrication additive, ledit corps de base présentant au moins un tube de buse (10), une pointe de buse (13) et un collet d'appui (16), le procédé présentant au moins les étapes suivantes :
- fabrication d'un écrou de fixation (18) selon le procédé de fabrication additive, la fabrication de l'écrou de fixation (18) s'effectuant simultanément avec la fabrication du corps de base (17).
- génération simultanée de moyens de retenue (19) entre l'écrou de fixation (18) et le corps de base (17) au moyen du procédé de fabrication additive et
- sectionnement subséquent des moyens de retenue (19) pour séparer l'écrou de fixation (18) du corps de base (17).

13. Procédé selon la revendication 12,
**caractérisé en ce que**
le sectionnement des moyens de retenue (19) est exécuté au moyen d'un procédé de fabrication avec enlèvement de copeaux.

14. Procédé selon l'une des revendications 12 ou 13,
**caractérisé en ce que**
le corps de base (17) et/ou l'écrou de fixation (18) sont au moins en partie usinés par enlèvement de copeaux après la fabrication au moyen du procédé de fabrication additive.

15. Procédé selon la revendication 14,
**caractérisé en ce que**
un revêtement de surface est appliqué au moins en partie sur le corps de base (17) et/ou l'écrou de fixation (18) après la fabrication au moyen du procédé de fabrication additive et/ou avant ou après l'usinage par enlèvement de copeaux.
